# EUROPEAN PATENT APPLICATION

(11) **EP 3 922 686 A1**
(43) Date of publication of application: **15.12.2021**
(21) Application number: 21176091.3
(22) Date of filing: 26.05.2021
(51) Int. Cl.: C09D 5/44

(54) **ELECTROCOATING COMPOSITION**

(30) Priority: 28.05.2020 US 202063031367 P; 21.05.2021 US 202117327561
(71) Applicant: Axalta Coating Systems IP Co., LLC, Wilmington, DE 19801 (US)
(72) Inventor: Gupta, Harshit, Philadelphia, 19103 (US); Markou, Konstantinos, Philadelphia, 19103 (US); Zeng, Hanxiang, Philadelphia, 19103 (US); Huesmann, Thomas, Philadelphia, 19103 (US)
(74) Representative: LKGlobal UK Ltd.

(57) **Abstract**

Cathodic electrocoating compositions and methods for coating electrically conductive substrates are provided. An exemplary cathodic electrocoating composition includes an aqueous carrier and a film forming binder dispersed in the carrier. Further, the cathodic electrocoating composition includes chitosan as an edge protective agent.

## Description

### TECHNICAL FIELD

The technical field generally relates to electrocoating compositions for coating substrates, and more particularly relates to electrocoating compositions that provide improved edge protection and good coating appearance.

### BACKGROUND

The coating of electrically conductive substrates by an electrodeposition process also called an electrocoating process is a well-known and important industrial process. Electrodeposition of primers to automotive substrates is widely used in the automotive industry. In this process, a conductive article, such as an autobody or an auto part, is immersed in a bath of a coating composition of an aqueous emulsion of film forming polymer and acts as an electrode in the electrodeposition process. An electric current is passed between the article and a counter-electrode in electrical contact with the aqueous emulsion, until a desired coating is deposited on the article. In a cathodic electrocoating process, the article to be coated is the cathode and the counter-electrode is the anode.

Resin compositions used in the bath of a typical cathodic electrodeposition process also are well known in the art. These resins typically are made from polyepoxide resins which have been chain extended and then an adduct is formed to include amine groups in the resin. Amine groups typically are introduced through reaction of the resin with an amine compound. These resins are blended with a crosslinking agent and then neutralized with an acid to form a water emulsion, which is usually referred to as a principal emulsion.

The principal emulsion is combined with a pigment paste, coalescent solvents, water, and other additives to form the electrocoating bath. The electrocoating bath is placed in an insulated tank containing the anode. The article to be coated is the cathode and is passed through the tank containing the electrodeposition bath. The thickness of the coating that is deposited on the article being electrocoated is a function of the bath characteristics, the electrical operating characteristics, the immersion time, and the like.

The resulting coated article is removed from the bath after a set period of time and is rinsed with deionized water to remove the cream coat. The coating on the article is cured typically in an oven at sufficient temperature to produce a crosslinked finish on the article.

The lack of edge protection or edge coverage of the composition has been a continuing problem with cathodic electrocoating compositions. There have been various additives proposed in the art to address this problem. However, there remains a desire for electrocoating compositions that have improved coverage at the edges of the coated substrate and which do not impart a negative impact on properties of the electrocoating layer, subsequent coating layers applied thereto, or both.

### SUMMARY

Cathodic electrocoating compositions improved edge protection and methods for coating electrically conductive substrates are provided. An exemplary cathodic electrocoating composition includes an aqueous carrier and a film forming binder dispersed in the carrier. Further, the cathodic electrocoating composition includes chitosan as an edge protective agent.

In another embodiment, an improved aqueous cathodic electrocoating composition is provided. The improved aqueous cathodic electrocoating composition includes an aqueous carrier and a film forming binder dispersed in the aqueous carrier. The improvement is the incorporation of chitosan as an edge protective agent.

In still another embodiment, a method for coating an electrically conductive substrate is provided. The method includes forming an electrodeposition bath of a cathodic electrocoating composition comprising an aqueous carrier, a film forming binder dispersed in the carrier, and an edge protective agent comprising chitosan. The method also includes dipping the electrically conductive substrate into the electrodeposition bath, connecting the substrate as a cathode, and applying a current to the substrate to deposit a film on the substrate. Further, the method includes removing the substrate with the deposited film from the electrodeposition bath and baking the deposited coating film.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### DETAILED DESCRIPTION

The following detailed description is merely exemplary in nature and is not intended to limit the electrocoating compositions and methods for forming electrocoating compositions as described herein. Furthermore, there is no intention to be bound by any theory presented in the preceding background or summary or in the following detailed description.

As used herein, "a," "an," or "the" means one or more unless otherwise specified. The term "or" can be conjunctive or disjunctive. Open terms such as "include," "including," "contain," "containing" and the like mean "comprising." In certain embodiments, numbers in this description indicating amounts, ratios of materials, physical properties of materials, and/or use are may be understood as being modified by the word "about". The term "about" as used in connection with a numerical value and the claims denotes an interval of accuracy, familiar and acceptable to a person skilled in the art. In general, such interval of accuracy is ±10%. All numbers in this description indicating amounts, ratios of materials, physical properties of materials, and/or use may be understood as modified by the word "about," except as otherwise explicitly indicated. As used herein, the "%" or "percent" described in the present disclosure refers to the weight percentage unless otherwise indicated.

An electrocoating composition for coating a substrate is provided herein. The electrocoating composition may be utilized to coat any type of substrate known in the art or industrial sectors. In embodiments, the substrate is a vehicle, automobile, or automobile vehicle. "Vehicle" or "automobile" or "automobile vehicle" includes an automobile, such as, car, van, minivan, bus, SUV (sports utility vehicle); truck; semi-truck; tractor; motorcycle; trailer; ATV (all-terrain vehicle); pickup truck; heavy duty mover, such as, bulldozer, mobile crane and earth mover; airplanes; boats; ships; and other modes of transport.

The electrocoating composition is utilized to form a coating layer on the substrate. Exemplary embodiments herein provide a full electrocoating bath to form a coating layer on a substrate. Certain embodiments utilize epoxy amine based resins or binders that are neutralized with acids to form emulsions.

Weak edge protection is a major source of corrosion for electrocoated surfaces. Typically, efforts to improve edge protection have resulted in worsening other characteristics of the coating and coating appearance. Such efforts are described in U.S. Pat. Nos. 6,207,731; 8,062,760; 5,096,556; 5,407,976; and 6,951,602; among others.

However, herein is described a composition and method for improving edge protection while maintaining coating appearance.

It has been surprisingly found that the use of chitosan as an edge protective agent within an electrocoating composition as described herein provides improved edge protection for films formed by electrocoating.

Thus, provided herein is an electrocoating composition, such as for use as an electrodeposition bath, with improved edge protection that includes an aqueous carrier; a film forming binder dispersed in the carrier and comprising an epoxy-amine adduct and a blocked polyisocyanate crosslinking agent; a pigment paste; and an edge protective comprising, consisting essentially of, or consisting of chitosan.

### Chitosan

Chitosan is a linear polysaccharide of deacetylated beta-1, 4-D-glucosamine formed from deacetylated chitin. Chitosan may be composed of randomly distributed β-(1→4)-linked D-glucosamine (deacetylated unit) and N-acetyl-D-glucosamine (acetylated unit).

Chitosan is typically produced by treating the shells of shrimp and other crustaceans. Specifically, the process includes the deacetylation of chitin, which is the structural element in the exoskeleton of crustaceans and cell walls of fungi. A common method for the synthesis of chitosan is the deacetylation of chitin using sodium hydroxide in excess as a reagent and water as a solvent. The degree of deacetylation (%DD) can be determined by NMR spectroscopy, and the %DD in commercial chitosans ranges from 60 to 100%.

In example embodiments, chitosan is incorporated into the electrocoating composition. The chitosan may be added in powder form, in solution form, etc. In an exemplary embodiment, the electrocoating composition includes deacetylated chitosan. For example, the chitosan may have a degree of deacetylation of greater than 40 or 50%, such as greater than 55%, or for example greater than 60%. An exemplary chitosan for use in the electrocoating composition has a degree of deacetylation of greater than 65%, such as greater than 70%, or for example greater than 75%. Further, the chitosan may have a degree of deacetylation of less than 100%, such as less than 95%, or for example less than 90%. In certain embodiments, the chitosan has a degree of deacetylation of from 75% to 90%.

On average, the molecular weight of commercially produced chitosan is between 3800 and 20,000 Daltons. For commercial purposes, the molecular weight of chitosan may be characterized from measurement of the viscosity of chitosan in dilute solutions. For dilute solutions, the relation between the viscosity and the molecular weight is known. Herein, viscosity of chitosan is measured at a concentration of 1% (wt/wt) chitosan in a 1% (wt/wt) acetic acid solution at 25 °C. In an exemplary embodiment, the chitosan has a viscosity of from 20 to 20,000 centipoise (cP) or millipascal seconds (mPa-s). An exemplary chitosan may have a viscosity under such conditions of greater than 10, 20, 30, 60, 100, 200, 400, 600, 800, 1000, 1500, 2000, 2500, 3000, or 4000 cP. Further, an exemplary chitosan may have a viscosity under such conditions of less than 20,000, 10,000, 5000, 4000, 3000, 2500, or 2000 cP.

The amount of chitosan in an exemplary electrocoating composition may be at least 20 parts per million (ppm), such as at least 50 ppm, for example at least 100 ppm, (All ppm measurements herein are based on the total weight of chitosan solids in total weight of the electrocoating composition). In an exemplary embodiment, the amount of chitosan in the electrocoating composition is at least 150 ppm, such as at least 200 ppm, for example at least 220 ppm. In further embodiments, the amount of chitosan in the electrocoating composition is at least 500 ppm, such as at least 700 ppm, for example at least 900 ppm.

Further, in exemplary embodiments, the amount of chitosan in the electrocoating composition may be less than 10,000 ppm, such as less than 7500 ppm, for example less than 5000 ppm. In certain embodiments, the amount of chitosan in the electrocoating composition is from 20 ppm to 10,000 ppm, such as from 200 ppm to 5000 ppm.

### Film Forming Binder

Most of the solids in the electrocoated film come from the backbone emulsion or resin or film forming binder in the electrocoating bath. Common cathodic electrocoating backbone emulsions include an acid-neutralized water-soluble binder of an epoxy amine adduct blended with a crosslinking agent. Exemplary binders and crosslinking agents are disclosed in U.S. Pat. No. 4,419,467, which is hereby incorporated by reference. Typical crosslinking agents are based on blocked isocyanates which are prepared by reacting isocyanates such as hexamethylene diisocyanate, cyclohexamethylene diisocyanate, toluene diisocyanate, methylene diphenyl diisocyanate, or other suitable isocyanates, with blocking agents like oximes, alcohols, or caprolactams, which block the reactive isocyanate functionality. These blocking agents separate only during baking and provide a reactive isocyanate group which can react with hydroxy or amine group and form crosslink networks. An exemplary film forming binder contains from 20 to 50 percent by weight solids, such as from 35 to 45 percent by weight solids. For example, film forming binders tested below contain 37 or 39 percent by weight solids. While such embodiments have been tested, it is contemplated that electrocoating compositions described herein may utilize any suitable film forming binder.

### Additives

Further additives such as catalysts, anti-crater additives, etc., can be added to the emulsion to achieve desired properties.

### Pigment Paste

Another major source of solids in electrocoated films come from pigments that are incorporated in the electrocoating composition in the form of a paste. Pigment paste may be prepared by de-agglomerating pigment particles and dispersing them in a grinding vehicle. An exemplary grinding vehicle includes a resin (grinding resin), water and additives like wetting agents, surfactants, catalyst and defoamers. Any suitable known pigment grinding vehicle may be used. After grinding, the particle size of the pigment should be as small as practical; generally, the particle size is from 6 to 8 using a Hegman grinding gauge.

Exemplary pigments for use in the electrocoating composition include titanium dioxide, barium sulfate, carbon black, hydrated aluminum silicate, basic lead silicate, strontium chromate, iron oxide, clay and the like. In certain embodiments, the pigment paste may include an anti-corrosive pigment or blends of anticorrosive pigments. Exemplary anti-corrosive pigments include metallic chromates, phosphates, phosphites, borates, borosilicates, phosphosilicates, molybdates, oxides, and rare earth compounds. Organic anticorrosive agents may optionally also be present; they include benzotriazoles, morpholines, azoles, calcium alkyl-aryl sulfonates, diamines, and metal salts of dinonylnapathalene sulfonates.

An exemplary pigment paste may contain from 35 to 70, such as from 40 to 65, for example from 45 to 60, percent by weight solids. For example, film forming binders tested below contain 50 or 58 percent by weight solids. While such embodiments have been tested, it is contemplated that electrocoating compositions described herein may utilize any suitable pigment paste. General cathodic electrocoating pigment pastes can be used, such as those disclosed in U.S. Pat. No. 6,207,731.

After formation of a bath of an exemplary electrocoating composition, the electrocoating composition is from 10 to 30% bath solids. For example, the electrocoating composition may be from 15 to 25% bath solids, such as 18 to 22% bath solids. In the examples described below, the electrocoating composition is 19% bath solids, though other embodiments of the bath formation are envisioned.

After formation of a bath of an exemplary electrocoating composition, the electrocoating composition has a pigment to binder (P/B) ratio of from 10 to 40%, i.e., 0.1:1 to 0.4:1. For example, the bath may have a pigment to binder ratio of at least 5%, such as at least 10%, for example at least 15%. Further, the bath may have a pigment to binder ratio of less than 40%, such as less than 35%, for example less than 30%. For example, film forming binders tested below have a pigment to binder ratio of 18% or 25%. While such embodiments have been tested, it is contemplated that electrocoating compositions described herein may exhibit any suitable pigment to binder ratio. Generally, higher pigment to binder weight ratios in the composition can affect the flow of the composition and therefore, appearance.

### EXAMPLES

Examples were prepared from pigment and binder combinations A and B and were tested for edge protection performance. Pigment and binder combination A is formed from a commercially available pigment paste that is 50% solids and a commercially available backbone emulsion that is 39% solids. Pigment and binder combination B is formed from a commercially available pigment paste that is 58% solids and a commercially available backbone emulsion that is 37% solids.

For each combination, A and B, examples are formed with chitosan (Examples A1 and B1), with a low viscosity chitosan (Examples A2 and B2), and with a high viscosity chitosan (Examples A3 and B3). The amount of chitosan in examples A2 and A3 is the same. Further, the amount of chitosan in Examples B2 and B3 is the same. As a result, the performance improvement provided by the addition of chitosan may be evaluated within each binder/pigment combination A and B, i.e., Examples A1, A2 and A3 may be compared with one another, and Examples B1, B2, and B3 may be compared with one another.

### Preparation of Electrocoating Compositions for Use as Electrodeposition Bath

For the examples in both combinations A and B, the baths were prepared by combining a suitable emulsion with additives, water and pigment paste. It is noted that the chitosan may be added to the emulsion, to the pigment paste, or to both the emulsion and the pigment paste. Further, it is noted that the chitosan may be added in powder form, in solution form, etc.

Each mixture formed by combining the emulsion, additives, water and pigment paste was stirred for at least 4 hours before panels were electrocoated via the application of a voltage of from 170 to 280 volts to deposit a film having a film thickness of from 0.8 to 1.0 mils (from 20.23 to 25.4 microns). The coated panels were analyzed for surface roughness using a profilometer and edge corrosion resistance using a corrosion testing method.

**TABLE 1: Composition of Example Baths**

| **Electrocoating composition components** | **Example A1** | **Example A2** | **Example A3** | **Example B1** | **Example B2** | **Example B3** |
|---|---|---|---|---|---|---|
| Backbone emulsion A (39% solids) | 1057 g | 1057 g | 1057 g | 0 | 0 | 0 |
| Backbone emulsion B (37% solids) | 0 | 0 | 0 | 1346 g | 1346 g | 1346 g |
| DI Water | 2469 g | 2469 g | 2469 g | 1269 g | 1269 g | 1269 g |
| Pigment paste A (50% solids) | 174 g | 174 g | 174 g | 0 | 0 | 0 |
| Pigment paste B (58% solids) | 0 | 0 | 0 | 300 g | 300 g | 300 g |
| Viscosity of 1% Chitosan solids by wt in 1% Acetic acid solution | No additive | 237 cp | 540 cp | No additive | 1500 cp | 4000 cp |
| Chitosan in electrocoating composition bath (wt/wt) | 0 | 242 ppm | 242 ppm | 0 | 960 ppm | 960 ppm |

**TABLE 2: Properties of Example Baths**

| **Properties** | **Example A1** | **Example A2** | **Example A3** | **Example B1** | **Example B2** | **Example B3** |
|---|---|---|---|---|---|---|
| Bath Solid (%) | 19% | 19% | 19% | 19% | 19% | 19% |
| Bath P/B (%) | 18% | 18% | 18% | 25% | 25% | 25% |
| Coating Appearance - Ra (µm) | 0.57 | 0.9 | 0.75 | 0.36 | 0.56 | 0.58 |
| Edge Corrosion performance rating (5-worst; 0-best) | 3.8 | 1.9 | 2.0 | 4.4 | 2.0 | 2.1 |

| | | | | | | |
|---|---|---|---|---|---|---|
| * Edge corrosion was evaluated on punch hole panels from Chemetall. | | | | | | |

Edge corrosion performance was characterized via Daimler Test Specification MBN 10494-6 on perforated galvanized panels after accelerated cyclic corrosion (VDA 233-102), and the coating appearance was evaluated by surface roughness (Ra). As can be seen, edge corrosion performance was improved for embodiments including chitosan (Example A2 and A3) over the comparative Example A1, which does not include chitosan. Again, edge corrosion performance was improved for embodiments including chitosan (Example B2 and B3) over the comparative Example B1, which does not include chitosan.

The electrocoating composition may be described herein as an aqueous dispersion. The term "dispersion" as used within the context herein is believed to be a two-phase translucent or opaque aqueous resinous binder system in which the binder is in the dispersed phase and water the continuous phase. The average particle size diameter of the binder phase may be 0.1 to 10 microns, such as less than 5 microns. The concentration of the binder in the aqueous medium in general is not critical, but ordinarily the major portion of the aqueous dispersion is water. The aqueous dispersion usually contains from 3 to 60 percent, such as 5 to 40 percent by weight binder solids. Aqueous binder concentrates which are to be further diluted with water when added to an electrocoating bath, generally have a range of binder solids of 10 to 30 percent weight.

A method for coating an electrically conductive substrate includes forming an electrodeposition bath of a cathodic electrocoating composition as described above. The method further includes dipping the electrically conductive substrate into the electrodeposition bath, connecting the substrate as a cathode, and applying a current to the substrate to deposit a film on the substrate. Also, the method includes removing the substrate with the deposited film from the electrodeposition bath and baking the deposited coating film.

As compared to conventional aqueous cathodic electrocoating compositions, a cathodic electrocoating composition formed with the above-described edge protective agent exhibited improved edge protection and good coating appearance.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment. It being understood that various changes may be made in the function and arrangement of elements described in an exemplary embodiment without departing from the scope as set forth in the appended claims.

## Claims

1. A cathodic electrocoating composition comprising:
an aqueous carrier;
a film forming binder dispersed in the aqueous carrier; and
an edge protective agent comprising chitosan.

2. The cathodic electrocoating composition of claim 1, wherein the chitosan has a viscosity, measured at a concentration of 1% (wt/wt) chitosan in a 1% (wt/wt) acetic acid solution at 25 °C, of from about 20 to about 20,000 centipoise (cP).

3. The cathodic electrocoating composition of claims 1 or 2, wherein the chitosan has a viscosity, measured at a concentration of 1% chitosan in a 1% acetic acid solution at 25 °C, of from about 200 to about 5,000 centipoise (cP).

4. The cathodic electrocoating composition of any one of claims 1-3, wherein the chitosan is deacetylated and has a degree of deacetylation of from about 75% to about 90%.

5. The cathodic electrocoating composition of any one of claims 1-4, wherein the chitosan is present in an amount of from about 20 to about 10,000 parts per million (ppm), based on a total weight of the cathodic electrocoating composition.

6. The cathodic electrocoating composition of any one of claims 1-5, further comprising a pigment paste, wherein the pigment paste contains from about 35 to about 70 percent by weight solids.

7. The cathodic electrocoating composition of any one of claims 1-6, further comprising a pigment paste, wherein the cathodic electrocoating composition has a pigment to binder (P/B) ratio of from about 10 to about 30%.

8. The cathodic electrocoating composition of any one of claims 1-7, wherein the film forming binder comprises an epoxy-amine adduct and a blocked polyisocyanate crosslinking agent.

9. The cathodic electrocoating composition of any one of claims 1-8, wherein the edge protective agent consists essentially of, or consists of, chitosan.

10. The cathodic electrocoating composition of any one of claims 1-9, wherein:
the chitosan has a viscosity, measured at a concentration of 1% chitosan in a 1% acetic acid solution at 25 °C, of from about 200 to about 5,000 centipoise (cP);
the chitosan is deacetylated and has a degree of deacetylation of from about 75% to about 90%;
the chitosan is present in an amount of from about 200 to about 5000 ppm, based on a total weight of the cathodic electrocoating composition;
the film forming binder contains from about 35 to about 45 percent by weight solids;
the cathodic electrocoating composition further comprises a pigment paste that contains from about 45 to about 60 percent by weight solids; and
the cathodic electrocoating composition has a pigment to binder (P/B) ratio of from about 10 to about 30%.

11. A method for coating an electrically conductive substrate, comprising:
forming an electrodeposition bath of a cathodic electrocoating composition according to any one of claims 1-10;
dipping the electrically conductive substrate into the electrodeposition bath;
connecting the substrate as a cathode;
applying a current to the substrate to deposit a film on the substrate;
removing the substrate with the film from the electrodeposition bath; and
baking the substrate with the film.
